# EUROPÄISCHE PATENTSCHRIFT

(11) **EP 3 005 446 B1**
(45) Veröffentlichungstag und Bekanntmachung des Hinweises auf die Patenterteilung: **20.12.2017**
(21) Anmeldenummer: 14728967.2
(22) Anmeldetag: 06.06.2014
(51) Int. Cl.: H01M 2/12, B29L 31/26

(54) **VERSCHLUSSSTOPFENANORDNUNG, GEHÄUSE EINES AKKUMULATORS UND AKKUMULATOR**
SEALING PLUG ASSEMBLY, HOUSING OF A BATTERY, AND BATTERY
SYSTÈME DE BOUCHON DE FERMETURE, CARTER D'ACCUMULATEUR ET ACCUMULATEUR

(30) Priorität: 06.06.2013 DE 102013105817
(43) Veröffentlichungstag der Anmeldung: 13.04.2016
(73) Patentinhaber: Johnson Controls Autobatterie GmbH & Co. KGaA, 30419 Hannover (DE)
(72) Erfinder: KOCH, Ingo, 31789 Hameln (DE); IDE, Bernd, 30419 Hannover (DE)
(74) Vertreter: Trinks, Ole
(86) Internationale Anmeldenummer: PCT/EP2014/061846
(87) Internationale Veröffentlichungsnummer: WO 2014/195466

(56) Entgegenhaltungen:
- EP-A2- 1 156 538
- DE-B- 1 195 830
- DE-U1-202009 009 556
- KR-B1- 101 268 296

## Beschreibung

Die Erfindung betrifft eine Verschlussstopfenanordnung zum Verschließen einer kombinierten Befüllungs- und Entgasungsöffnung eines Akkumulators gemäß dem Oberbegriff des Anspruchs 1. Die Erfindung betrifft ferner ein Gehäuse eines Akkumulators gemäß Anspruch 9 sowie einen Akkumulator gemäß Anspruch 11. Allgemein betrifft die Erfindung das Gebiet elektrochemischer Akkumulatoren mit flüssigem Elektrolyten, z. B. Blei-Säure-Akkumulatoren. Das Gehäuse des Akkumulators weist im Allgemeinen einen in mehrere Kammern unterteilten Gehäuseraum auf, in dem der flüssige Elektrolyt vorgesehen ist. Je nach Ausführungsform des Akkumulators kann der flüssige Elektrolyt in einem Vliesmaterial aufgenommen und damit gebunden sein. Zur Befüllung des Gehäuses mit dem flüssigen Elektrolyten ist wenigstens eine Gehäuseöffnung als Befüllungsöffnung vorgesehen. Die Befüllungsöffnung muss für einen praktischen Betrieb des Akkumulators abgedichtet verschließbar sein, um einen unerwünschten Austritt von Säure zu vermeiden und einen gewissen - wenn auch geringen - Überdruck im Akkumulatorgehäuse zu halten. Zur Sicherung des Akkumulators gegen einen unerwünscht hohen Überdruck im Gehäuse ist es vorteilhaft, eine Überdrucksicherung vorzusehen, die bei zu hohem Druck einen Auslass von Gas aus dem Gehäuse erlaubt, z. B. über die Befüllungsöffnung, die dann eine kombinierte Befüllungs- und Entgasungsöffnung ist.

Für die Abdichtung der kombinierten Befüllungs- und Entgasungsöffnung wird bei bekannten Akkumulatoren eine Verschlussstopfenanordnung vorgesehen, die wenigstens ein Ventilteil, einen Ventilhalter und einen Verschlussstopfen aufweist. Entsprechende Vorschläge sind z. B. aus der WO 2010/124684 A2, der DE 10 2007 061 784 A1, der KR 101 268 296 B1 oder der DE 10 2009 041 417 A1 bekannt.

Der Erfindung liegt die Aufgabe zugrunde, eine demgegenüber weiter verbesserte Verschlussstopfenanordnung anzugeben.

Diese Aufgabe wird gemäß Anspruch 1 gelöst durch eine Verschlussstopfenanordnung zum Verschließen einer kombinierten Befüllungs- und Entgasungsöffnung eines Akkumulators, wobei die Verschlussstopfenanordnung wenigstens ein Ventilteil, einen Ventilhalter und einen Verschlussstopfen aufweist, wobei das Ventilteil auf dem Ventilhalter angeordnet ist und mit dem Ventilhalter eine bei Druckbeaufschlagung öffenbare Ventileinrichtung zur Abdichtung wenigstens eines Innenraums des Akkumulators gegenüber der Umgebung bildet, wobei der Verschlussstopfen wenigstens ein Befestigungsmittel zur Befestigung des Verschlussstopfens an der Befüllungs- und Entgasungsöffnung und wenigstens einen ersten und einen zweiten umlaufenden Dichtring aufweist, die in axialer Richtung des Verschlussstopfens einen Abstand voneinander aufweisen und die als zwischen dem Verschlussstopfen und dem umgebenden Material der Befüllungs- und Entgasungsöffnung wirksame Dichtungen ausgebildet sind, wobei das wenigstens eine Befestigungsmittel in axialer Richtung des Verschlussstopfens zwischen dem ersten und dem zweiten Dichtring angeordnet ist, wobei der Verschlussstopfen eine Ventilbeaufschlagungsfläche aufweist, über die das Ventilteil gegenüber dem Ventilhalter mit einer Vorspannkraft beaufschlagt ist. Mit der Erfindung wird eine Verschlussstopfenanordnung bereitgestellt, die gegenüber bekannten Lösungen kompakter ist und kürzer baut. Durch die Anordnung des wenigstens einen Befestigungsmittels in axialer Richtung des Verschlussstopfens zwischen dem ersten und dem zweiten Dichtring wird zudem die Kraftübertragung zwischen dem Befestigungsmittel des Verschlussstopfens und dem entsprechenden als Gegenstück dienendem Befestigungsmittel der umgebenden Befüllungs- und Entgasungsöffnung mechanisch optimiert. Die Kraftübertragungsstelle ist damit näher an dem ersten und dem zweiten Dichtring angeordnet, so dass insbesondere bei Verwendung eines als Axialdichtring ausgebildeten Dichtrings dieser direkter mit der Haltekraft des Befestigungsmittels beaufschlagt werden kann. Eine durch die Haltekraft des Befestigungsmittels eventuell erfolgende Dehnung des Materials des Verschlussstopfens bzw. deren Einfluss auf die Dichtwirkung des Axialdichtrings wird minimiert. Gegenüber bekannten Lösungen kann hiermit eine bessere Dichtwirkung erzielt werden. Insbesondere bei Akkumulatoren mit typbedingt höherem innerem Gasdruck, wie z.B. AGM-Batterien, wird eine bessere Gasdichtheit erzielt.

Ein weiterer Vorteil ist, dass der erste und der zweite Dichtring sozusagen um die Befestigungsstelle des Verschlussstopfens an der Befüllungs- und Entgasungsöffnung herum angeordnet sind, so dass sich eine symmetrischere Kräfteverteilung und damit eine gleichmäßigere Dichtwirkung an beiden Dichtringen ergibt.

Das wenigstens eine Befestigungsmittel des Verschlussstopfens kann z. B. als Außengewinde ausgebildet sein, das in ein entsprechendes Innengewinde der Befüllungs- und Entgasungsöffnung eingeschraubt werden kann. Es können auch andere Befestigungsmittel vorgesehen sein, z. B. Schnappbefestigungsmittel oder Rastmittel, wie z. B. Rasthaken.

Gemäß einer vorteilhaften Weiterbildung der Erfindung ist wenigstens einer der Dichtringe als Axialdichtring ausgebildet, der bei über das wenigstens eine Befestigungsmittel in der Befüllungs- und Entgasungsöffnung befestigtem Verschlussstopfen mit einer in Axialrichtung des Verschlussstopfens wirkenden Haltekraft des wenigstens einen Befestigungsmittels beaufschlagt ist. Mit einem Axialdichtring kann eine wesentlich bessere Abdichtwirkung im Vergleich zu einem Radialdichtring erzielt werden. In Kombination mit dem im Vergleich zum Stand der Technik relativ nahe am Axialdichtring angeordneten Befestigungspunkt des Verschlussstopfens an der umgebenden Befüllungs- und Entgasungsöffnung kann die Dichtwirkung weiter verbessert werden und insbesondere weitgehend unabhängig von Maßtoleranzen und der Rigidität des Materials des Verschlussstopfens gestaltet werden.

Gemäß einer vorteilhaften Weiterbildung der Erfindung ist der Axialdichtring an einer weiter im Inneren der Befüllungs- und Entgasungsöffnung liegenden Axialposition des Verschlussstopfens angeordnet als der andere Dichtring der beiden Dichtringe, d.h. des ersten und des zweiten Dichtrings. Mit anderen Worten, der Axialdichtring ist in einer Axialposition angeordnet, die bei Einsetzen des Verschlussstopfens in die Befüllungs- und Entgasungsöffnung vor der Axialposition des anderen Dichtrings liegt. Entsprechend erzeugt das Befestigungsmittel eine als Druckkraft ausgebildete Haltekraft auf den Axialdichtring, was hinsichtlich der Abdichtwirkung und der Kraftübertragung ebenfalls vorteilhaft gegenüber einer Zugkraft ist, wie sie bei Verschlussstopfen im Stand der Technik auftritt.

Gemäß einer vorteilhaften Weiterbildung der Erfindung ist wenigstens einer der Dichtringe als Radialdichtring ausgebildet, der bei über das wenigstens eine Befestigungsmittel in der Befüllungs- und Entgasungsöffnung befestigtem Verschlussstopfen nicht mit einer in Axialrichtung des Verschlussstopfens wirkenden Haltekraft des wenigstens einen Befestigungsmittels beaufschlagt ist. Vorteilhaft ist insbesondere eine Kombination derart, dass einer der Dichtringe als Radialdichtring und der andere Dichtring als Axialdichtring ausgebildet ist. Dies erlaubt eine gleichbleibende, statisch bestimmte Presskraft, die auf den Axialdichtring wirkt. Der Radialdichtring passt sich hinsichtlich seiner Axialposition gegenüber der umgebenden Befüllungs- und Entgasungsöffnung dann an.

Der erste und der zweite Dichtring sind als umlaufende Dichtringe ausgebildet. Bei Ausbildung als Radialdichtring kann dieser umfangsseitig am Verschlussstopfen angeordnet sein, so dass er den Außenumfang des Verschlussstopfens umgibt. Bei Ausbildung als Axialdichtring kann dieser an einer kreisringförmigen Anlagefläche des Verschlussstopfens angeordnet sein, oder an einer den Außenumfang des Verschlussstopfens umgebenden Anlagefläche, die an eine kreisringförmige Anlagefläche des Verschlussstopfens angrenzt und z.B. einen rechten Winkel zu der den Außenumfang des Verschlussstopfens umgebenden Anlagefläche bildet.

Gemäß einer vorteilhaften Weiterbildung der Erfindung weist der Verschlussstopfen in dem axialen Bereich zwischen dem ersten und dem zweiten Dichtring wenigstens eine Entgasungsöffnung auf. Das hat den Vorteil, dass der Verschlussstopfen einsetzbar ist für Akkumulatorgehäuse, die im oberen Bereich, in der Regel in einem als Deckel dienenden Gehäuseoberteil, wenigstens einen zu einer Gasauslassöffnung des Gehäuses verlaufenden Entgasungskanal aufweisen. Vorteilhaft ist die Entgasungsöffnung des Verschlussstopfens dann derart angeordnet, dass sie mit dem Entgasungskanal in direktem Kontakt ist und mittels der Ventileinrichtung einen definierten Gasaustritt über die Entgasungsöffnung des Verschlussstopfens in den Entgasungskanal erlaubt.

Gemäß einer vorteilhaften Weiterbildung der Erfindung weist der Verschlussstopfen an seinem zur Außenseite des Akkumulators gerichteten Endbereich eine Wand auf, die den Innenraum des Akkumulators zur Umgebung hin abdichtet, wenn der Verschlussstopfen in die Befüllungs- und Entgasungsöffnung eingesetzt ist. Dies hat den Vorteil, dass mittels des Verschlussstopfens das Akkumulatorgehäuse an seiner Außenseite komplett durch die Verschlussstopfen abgedichtet werden kann, so dass über die Befüllungs- und Entgasungsöffnungen weder flüssiger Elektrolyt noch entstehendes Gas direkt in die Umgebung entweichen kann. Entstehendes Gas kann höchstens über einen Entgasungskanal zu einer definierten Stelle des Gehäuses geführt werden, an der eine Gasauslassöffnung vorgesehen ist, die in der Regel mit einem Rückzündschutz versehen ist. Aus den einzelnen Befüllungs- und Entgasungsöffnungen kann aber nicht direkt Gas ins Freie entweichen.

Gemäß einer vorteilhaften Weiterbildung der Erfindung weist der Verschlussstopfen einen in Axialrichtung sich erstreckenden rohrförmigen Fortsatz auf, der sich in axialer Richtung durch den zweiten Dichtring hindurch erstreckt und in einem inneren Hohlraum den Ventilhalter aufnimmt. Dies hat den Vorteil, dass der Ventilhalter über eine relativ große Distanz durch den rohrförmigen Fortsatz gehalten und gestützt werden kann. Hierdurch lässt sich eine robuste mechanische Fixierung des Ventilhalters an dem Verschlussstopfen realisieren.

Gemäß einer vorteilhaften Weiterbildung der Erfindung verjüngt sich der Querschnitt eines inneren Hohlraums des Ventilhalters in axialer Richtung zum Ventilteil hin. Der sich verjüngende Bereich kann insbesondere rotationssymmetrisch ausgebildet sein. Der sich verjüngende Bereich kann insbesondere in dem axialen Endbereich des Ventilhalters angeordnet sein, in dem das Ventilteil auf dem Ventilhalter angeordnet ist. Dies hat den Vorteil, dass für das Ventilteil an einer oberen Auflagefläche des Ventilhalters mehr Platz als Auflagefläche zur Verfügung steht als bei bekannten Verschlussstopfenanordnungen. Zudem kann das seitliche Spiel für das Ventilteil verringert werden.

Der Ventilhalter kann an seinem Innenumfang rippenförmige Erhebungen aufweisen, zwischen den sich in Axialrichtung erstreckende Zwischenräume vorhanden sind. Durch diese Zwischenräume werden Strömungskanäle für austretendes Gas gebildet. Die rippenförmigen Erhebungen können insbesondere in dem zuvor erwähnten sich verjüngenden Innenbereich des Ventilhalters angeordnet sein.

Gemäß einer vorteilhaften Weiterbildung der Erfindung weist das Ventilteil einen Fortsatz auf, der im inneren Hohlraum des Ventilhalters angeordnet ist und als Halteabschnitt zum Halten des Ventilteils in bzw. an dem Ventilhalter fungiert.

Gemäß einer vorteilhaften Weiterbildung der Erfindung weist das Ventilteil einen Kragen auf, der einen Anschlag beim Einsetzen des Ventilteils in den Ventilhalter bildet. Dies erlaubt vorteilhaft ein einfaches Einsetzen des Ventilteils in den Ventilhalter, wobei mit wenig Aufwand das Ventilteil korrekt positioniert werden kann. Der Kragen kann beispielsweise vollständig umlaufend um einen Zentralabschnitt des Ventilteils angeordnet sein und auf diese Weise für eine Abdichtung der Befüllungs- und Entgasungsöffnung sorgen.

Gemäß einer vorteilhaften Weiterbildung der Erfindung weist das Ventilteil an seiner von dem Ventilhalter abgewandten Seite einen Überdrucksicherungsbereich mit einer Aussparung auf. Durch die Aussparung ist das Material des Ventilteils im Bereich des Überdrucksicherungsbereichs geschwächt, wodurch es leichter verformbar ist. Hierdurch kann ein definiertes Öffnen der Ventileinrichtung bei einem vorgegebenen Überdruck sichergestellt werden. Die Aussparung kann vorteilhaft direkt bei der Herstellung des Ventilteils durch entsprechende Formung des Materials hergestellt werden, z. B. durch geeignete Formgebung beim Vulkanisieren. Alternativ kann die Aussparung durch Abtragung von Material an dem Ventilteil in einem weiteren Bearbeitungsschritt erfolgen, z. B. mit einem spanenden Verfahren. Das Vorsehen der Aussparung auf der von dem Ventilhalter abgewandten Seite, d. h. auf der Seite, auf der der Gasdruck nicht ansteht, hat den Vorteil, dass die Formgebung und Größe der Aussparung den Strömungsquerschnitt für austretendes Gas bei Ansprechen der Überdrucksicherung nicht beeinflussen. Hierdurch kann die Überdrucksicherungsfunktion hinsichtlich des Ansprechdrucks über die Formgebung und Größe der Aussparung einfacher und gezielter den hierfür vorliegenden Anforderungen angepasst werden.

Gemäß einer vorteilhaften Weiterbildung der Erfindung weist die Aussparung in einer Draufsicht auf das Ventilteil eine im Wesentlichen lineare oder teilkreisförmige Kontur auf. Dies erlaubt eine einfache Herstellung der Aussparung.

Gemäß einer vorteilhaften Weiterbildung der Erfindung weist das Ventilteil im Bereich des Überdrucksicherungsbereichs eine Stelle mit erhöhter Flexibilität auf. Die Stelle mit erhöhter Flexibilität kann je nach Ausgestaltung des Ventilteils zusätzlich oder alternativ zu der zuvor erläuterten Aussparung vorgesehen werden. Die Stelle mit erhöhter Flexibilität erlaubt es, die Parameter für die Überdrucksicherungsfunktion nach Bedarf präzise vorzusehen, wie z. B. den Öffnungsdruck oder den Öffnungsquerschnitt der Ventileinrichtung in Abhängigkeit vom Überdruck.

Die Stelle mit erhöhter Flexibilität kann z. B. durch Vorsehen einer Materialschwächung des Materials des Ventilteils realisiert werden.

Gemäß einer vorteilhaften Weiterbildung der Erfindung besteht das Ventilteil ganz oder teilweise aus gummielastischem Material. Vorteilhaft wird dabei insbesondere im Überdrucksicherungsbereich gummielastisches Material verwendet. Auf diese Weise kann die Überdrucksicherung fertigungstechnisch mit wenig Aufwand vorgesehen werden, insbesondere ohne zusätzliche Gelenke oder Scharniere.

Gemäß einer vorteilhaften Weiterbildung der Erfindung besteht der Ventilhalter und/oder der Verschlussstopfen aus einem Material mit einer größeren Härte als das Material des Ventilteils. Der Ventilhalter und/oder der Verschlussstopfen können z.B. aus Kunststoff bestehen, z.B. Polypropylen.

Gemäß einer vorteilhaften Weiterbildung der Erfindung ist der wirksame Innendurchmesser des hohlen Bereichs des Ventilhalters größer - zumindest geringfügig größer - als der Außendurchmesser des Halteabschnitts des Ventilteils. Hierdurch wird das Ventilteil mit etwas Spiel im Ventilhalter gehalten, was eine gewisse Relativbewegung zwischen dem Halteabschnitt und dem Ventilhalter ermöglicht. Bei hohem Gasdruck im Innenraum des Akkumulators erfolgt nämlich eine gewisse Kompression des oberen Bereichs des Ventilteils, d. h. des außerhalb des hohlen Bereichs des Ventilhalters vorgesehenen Ventilteil-Bereichs, so dass sich der Halteabschnitt gegenüber dem Ventilhalter geringfügig nach oben hin verschiebt. Durch das Spiel kann sich das Ventilteil nach Verringerung des Gasdrucks wieder ausdehnen und in seine ursprüngliche Position zurückkehren. Hierdurch kann eine erneute Abdichtung durch das Ventilteil bzw. die Dichtwulst definiert gewährleistet werden.

Die eingangs genannte Aufgabe wird ferner gemäß Anspruch 9 gelöst durch ein Gehäuse eines Akkumulators mit einem kastenförmigen Gehäuseunterteil und einem als Deckel des Gehäuses dienenden, auf das Gehäuseunterteil aufsetzbaren oder aufgesetzten Gehäuseoberteil, wobei das Gehäuseoberteil wenigstens eine kombinierte Befüllungs- und Entgasungsöffnung des Akkumulators aufweist, die mit einer Verschlussstopfenanordnung der zuvor beschriebenen Art verschlossen ist.
Gemäß einer vorteilhaften Weiterbildung der Erfindung weist das Gehäuseoberteil wenigstens einen in dem Gehäuseoberteil zu wenigstens einer Gasauslassöffnung des Gehäuses verlaufenden Entgasungskanal auf, wobei die Gasauslassöffnung von der kombinierten Befüllungs- und Entgasungsöffnung beabstandet ist.

Die eingangs genannte Aufgabe wird ferner gemäß Anspruch 11 gelöst durch einen Akkumulator mit einem Gehäuse der zuvor angegebenen Art.

Die Erfindung wird nachfolgend anhand von Ausführungsbeispielen unter Verwendung von Zeichnungen näher erläutert.

Es zeigen:
- Figur 1: eine Ventilstopfenanordnung und
- Figur 2: ein Ventilteil und
- Figur 3: ausschnittsweise einen Akkumulator mit einem Gehäuse.

In den Figuren werden gleiche Bezugszeichen für einander entsprechende Elemente verwendet.

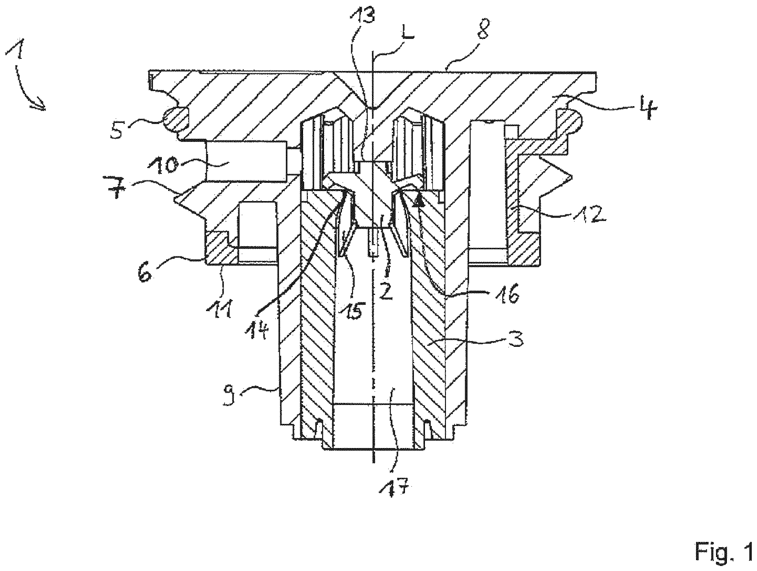

Die Figur 1 zeigt eine Verschlussstopfenanordnung 1 in seitlicher Schnittdarstellung. Erkennbar sind ein Ventilteil 2, ein Ventilhalter 3 und ein Verschlussstopfen 4. Der Ventilhalter 3 ist im Wesentlichen rohrförmig ausgebildet, z.B. mit kreisringförmigem Querschnitt, und weist einen inneren Hohlraum 17 auf, in dem ein Halteabschnitt des Ventilteils 2 angeordnet ist. Das Ventilteil 2 bildet mit einer oberen Auflagefläche des Ventilhalters 3 eine Ventileinrichtung 16, die ab einem gewissen Überdruck in dem Hohlraum 17 öffnet. Der Hohlraum 17 ist bei in einer Befüllungs- und Entgasungsöffnung des Akkumulators eingesetzter Verschlussstopfenanordnung mit dem Inneren des Akkumulators verbunden.

Der Verschlussstopfen 4 weist an seiner Oberseite, die zur Außenseite des Akkumulators gerichtet ist, eine Wand 8 auf, die vollständig flüssigkeits- und gasdicht ist. Der Verschlussstopfen 4 weist ferner an seiner von der Wand 8 abgewandten Seite, die zum Inneren des Akkumulators weist, einen sich in Axialrichtung erstreckenden rohrförmigen Fortsatz 9 auf. Der rohrförmige Fortsatz 9 dient zur Aufnahme und Befestigung des Ventilhalters 3, der in einen inneren Hohlraum des rohrförmigen Fortsatzes 9 eingesetzt ist.

An dem Verschlussstopfen 4 sind ein erster Dichtring 5 und ein zweiter Dichtring 6 angeordnet. Die Dichtringe 5, 6 sind als umlaufende Dichtringe ausgebildet. Der erste Dichtring 5 ist als Radialdichtring ausgebildet, der am Außenumfang des Ventilstopfens 4 angeordnet ist und diesen umgibt. Der zweite Dichtring 6 ist als Axialdichtring ausgebildet, der eine nach unten, d. h. zum Akkumulatorinneren gerichtete Dichtfläche 11 aufweist. Die aus z. B. gummielastischem Material ausgebildeten Dichtringe 5, 6 können über einen aus dem gleichen Material ausgebildeten Verbindungsabschnitt 12 zu einem Bauteil miteinander verbunden sein. In Axialrichtung des Verschlussstopfens 4, d. h. entlang der Längsachse L, ist zwischen dem ersten und dem zweiten Dichtring 5, 6 als Befestigungsmittel 7 ein Außengewinde angeordnet. Es kann sich z. B. um ein M30-Gewinde handeln. Ebenfalls in dem axialen Bereich zwischen den zwei Dichtringen 5, 6 weist der Verschlussstopfen 4 eine Entgasungsöffnung 10 auf. Über den Hohlraum 17 austretende Gase treten durch die Ventileinrichtung 16 hindurch und gelangen dann zu der Entgasungsöffnung 10, von wo aus sie über weitere Entgasungskanäle abgeleitet werden können.

Der Verschlussstopfen 4 weist erfindungsgemäß als weiteres Element eine Ventilbeaufschlagungsfläche 13 auf, die z. B. an einem inneren Fortsatz angeordnet sein kann, wie in der Figur 1 ersichtlich ist. Die Ventilbeaufschlagungsfläche 13 dient erfindungsgemäß dazu, das Ventilteil 2 mit einer gewissen Vorspannkraft gegenüber dem Ventilhalter 3 zu beaufschlagen, so dass die Ventileinrichtung 16 erst ab einem gewissen Mindestdruck oberhalb des Atmosphärendrucks öffnet. Die Vorspannkraft kann durch entsprechende Axialpositionierung des Ventilhalters 3 im inneren Hohlraum 17 festgelegt werden. Der Ventilhalter 3 kann im inneren Hohlraum 17 z.B. durch lösbare oder unlösbare Fixierungsmittel befestigt werden, z.B. an dem rohrförmigen Fortsatz 9. Als Fixierungsmittel kann z.B. eine Rast- oder Schnappverbindung, eine Verschweißung oder eine Verklebung zwischen dem Ventilhalter 3 und dem rohrförmigen Fortsatz 9 vorgesehen werden.

Erkennbar ist ferner, dass der Ventilhalter 3 im inneren Hohlraum 17 eine Querschnittsverjüngung 14 im oberen Bereich, hin zu der Auflagefläche für das Ventilteil 2 hin, aufweist. Die Querschnittsverjüngung 14 kann rotationssymmetrisch ausgebildet sein. Wie erkennbar ist, kann hierdurch die Auflagefläche für das Ventilteil 2 vergrößert werden, so dass die ganze Anordnung unempfindlicher gegenüber Maßtoleranzen ist. Am Innenumfang des Ventilhalters 3 kann dieser zusätzlich im oberen Bereich, dort wo der Halteabschnitt des Ventilteils 2 aufgenommen ist, über den Innenumfang verteilte Rippen 15 aufweisen. Zwischen den Rippen 15 sind Strömungskanäle für austretendes Gas gebildet.

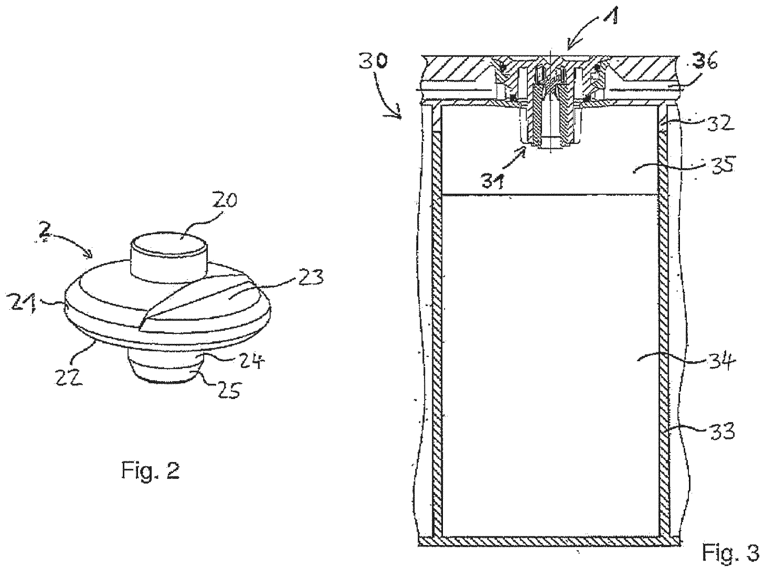

Die Figur 2 zeigt beispielhaft ein Ventilteil 1 in vergrößerter isometrischer Darstellung. Erkennbar ist, dass das Ventilteil 1 an seiner zur Ventilbeaufschlagungsfläche 13 des Verschlussstopfens 4 hin gewandten Seite einen z. B. zylindrischen Beaufschlagungsfortsatz 20 aufweist. An diesen schließt sich ein Bereich mit größerem Querschnitt an, der als Kragen 21 bezeichnet wird. Der Kragen 21 kann an seiner Unterseite eine umlaufende Dichtwulst 22 aufweisen, die wie eine Dichtlippe wirkt. Alternativ kann der Kragen 21 auch ohne Dichtwulst 22 ausgebildet sein, z. B. mit einer ebenen Oberfläche. In diesem Fall kann z. B. an der Oberseite des Ventilhalters 3 ein entsprechender umlaufender Dichtvorsprung angeordnet sein. Das Ventilteil 1 weist unterhalb des Kragens 21 einen Halteabschnitt 24 auf, der wie in Figur 1 ersichtlich in dem durch die Rippen 15 umgrenzten Bereich des Ventilhalters 3 angeordnet wird. Der Halteabschnitt 24 kann zylindrisch ausgebildet sein und zum unteren Ende des Ventilteils 1 hin in einen konischen Abschnitt 25 übergehen. Der konische Abschnitt 25 dient als Einführschräge und erleichtert das Einführen des Ventilteils 1 in den hohlen Bereich 17 des Ventilhalters 3.

Um eine Ventilfunktion mit definierter Druckansprechschwelle zu realisieren, kann das Ventilteil 1 an der Oberseite des Kragens 21 eine Aussparung 23 aufweisen. Durch die Aussparung 23 wird die Materialstärke des Kragens 21 in diesem Bereich verringert, so dass sich eine Stelle mit erhöhter Flexibilität ergibt. In Folge dessen kann sich der Kragen 21 im Bereich der Aussparung 23 durch den anstehenden Gasdruck leichter verformen als die übrigen Abschnitte des Kragens 21.

Die Figur 3 zeigt ausschnittsweise in seitlicher Schnittdarstellung einen Akkumulator 30 mit einem Gehäuse, das ein Gehäuseoberteil 32 und ein Gehäuseunterteil 33 aufweist. Der dargestellte Ausschnitt zeigt eine Akkumulatorzelle. Die Akkumulatorzelle weist einen Gehäuseraum 34, 35 auf, der zur Aufnahme von flüssigem Elektrolyten dient. Im oberen Bereich des Gehäuseraums 34, 35 ist ein Gasraum 35 vorgesehen. Im unteren Bereich 34 befindet sich der flüssige Elektrolyt. In dem Gehäuseoberteil 32 ist eine kombinierte Befüllungs- und Entgasungsöffnung 31 vorhanden, in der eine Verschlussstopfenanordnung 1 der zuvor beschriebenen Art eingesetzt ist. Die Verschlussstopfenanordnung 1 ist über das Außengewinde 7 in ein entsprechendes Innengewinde der Befüllungs- und Entgasungsöffnung 31 eingeschraubt. Wenn sich in dem Gasraum 35 Gas ansammelt und einen gewissen Überdruck überschreitet, öffnet die Ventileinrichtung 16. Hierdurch kann überschüssiges Gas über den inneren Hohlraum 17, die Ventileinrichtung 16 und die Entgasungsöffnung 10 des Verschlussstopfens 4 in einen Entgasungskanal 36 gelangen, der in dem Gehäuseoberteil 32 gebildet ist. Der Entgasungskanal 36 ist mit einer Gasauslassöffnung des Gehäuses 32, 33 verbunden, die wiederum mit der Umgebung verbunden ist.

## Patentansprüche

1. Verschlussstopfenanordnung (1) zum Verschließen einer kombinierten Befüllungs- und Entgasungsöffnung (31) eines Akkumulators (30), wobei die Verschlussstopfenanordnung (1) wenigstens ein Ventilteil (2), einen Ventilhalter (3) und einen Verschlussstopfen (4) aufweist, wobei das Ventilteil (2) auf dem Ventilhalter (3) angeordnet ist und mit dem Ventilhalter (3) eine bei Druckbeaufschlagung öffenbare Ventileinrichtung (16) zur Abdichtung wenigstens eines Innenraums (34, 35) des Akkumulators (30) gegenüber der Umgebung bildet, wobei der Verschlussstopfen (4) wenigstens ein Befestigungsmittel (7) zur Befestigung des Verschlussstopfens (4) an der Befüllungs- und Entgasungsöffnung (31) und wenigstens einen ersten und einen zweiten umlaufenden Dichtring (5, 6) aufweist, die in axialer Richtung (L) des Verschlussstopfens (4) einen Abstand voneinander aufweisen und die als zwischen dem Verschlussstopfen (4) und dem umgebenden Material der Befüllungs- und Entgasungsöffnung (31) wirksame Dichtungen ausgebildet sind, wobei das wenigstens eine Befestigungsmittel (7) in axialer Richtung (L) des Verschlussstopfens (4) zwischen dem ersten und dem zweiten Dichtring (5, 6) angeordnet ist,
**dadurch gekennzeichnet, dass**
der Verschlussstopfen (4) eine Ventilbeaufschlagungsfläche (13) aufweist, über die das Ventilteil (2) gegenüber dem Ventilhalter (3) mit einer Vorspannkraft beaufschlagt ist.

2. Verschlussstopfenanordnung nach Anspruch 1,
**dadurch gekennzeichnet, dass**
wenigstens einer der Dichtringe (5, 6) als Axialdichtring (6) ausgebildet ist, der bei über das wenigstens eine Befestigungsmittel (7) in der Befüllungs- und Entgasungsöffnung (31) befestigtem Verschlussstopfen (4) mit einer in Axialrichtung (L) des Verschlussstopfens (4) wirkenden Haltekraft des wenigstens einen Befestigungsmittels (7) beaufschlagt ist.

3. Verschlussstopfenanordnung nach Anspruch 2,
**dadurch gekennzeichnet, dass**
der Axialdichtring (6) an einer weiter im Inneren der Befüllungs- und Entgasungsöffnung (31) liegenden Axialposition des Verschlussstopfens (4) angeordnet ist als der andere Dichtring (5, 6).

4. Verschlussstopfenanordnung nach einem der vorhergehenden Ansprüche,
**dadurch gekennzeichnet, dass**
wenigstens einer der Dichtringe (5, 6) als Radialdichtring (5) ausgebildet ist, der bei über das wenigstens eine Befestigungsmittel (7) in der Befüllungs- und Entgasungsöffnung (31) befestigtem Verschlussstopfen (4) nicht mit einer in Axialrichtung (L) des Verschlussstopfens (4) wirkenden Haltekraft des wenigstens einen Befestigungsmittels (7) beaufschlagt ist.

5. Verschlussstopfenanordnung nach einem der vorhergehenden Ansprüche,
**dadurch gekennzeichnet, dass**
der Verschlussstopfen (4) in dem axialen Bereich zwischen dem ersten und dem zweiten Dichtring (5, 6) wenigstens eine Entgasungsöffnung (10) aufweist.

6. Verschlussstopfenanordnung nach einem der vorhergehenden Ansprüche,
**dadurch gekennzeichnet, dass**
der Verschlussstopfen (4) an seinem zur Außenseite des Akkumulators gerichteten Endbereich eine Wand (8) aufweist, die den Innenraum (34, 35) des Akkumulators (30) zur Umgebung hin abdichtet, wenn der Verschlussstopfen (4) in die Befüllungs- und Entgasungsöffnung (31) eingesetzt ist.

7. Verschlussstopfenanordnung nach einem der vorhergehenden Ansprüche,
**dadurch gekennzeichnet, dass**
der Verschlussstopfen (4) einen in Axialrichtung (L) sich erstreckenden rohrförmigen Fortsatz (9) aufweist, der sich in axialer Richtung durch den zweiten Dichtring (6) hindurch erstreckt und in einem Hohlraum den Ventilhalter (3) aufnimmt.

8. Verschlussstopfenanordnung nach einem der vorhergehenden Ansprüche,
**dadurch gekennzeichnet, dass**
sich der Querschnitt eines inneren Hohlraums (17) des Ventilhalters (3) in axialer Richtung (L) zum Ventilteil (2) hin verjüngt, insbesondere rotationssymmetrisch verjüngt.

9. Gehäuse eines Akkumulators (30) mit einem kastenförmigen Gehäuseunterteil (33) und einem als Deckel des Gehäuses dienenden, auf das Gehäuseunterteil (33) aufsetzbaren oder aufgesetzten Gehäuseoberteil (32), wobei das Gehäuseoberteil (32) wenigstens eine kombinierte Befüllungs- und Entgasungsöffnung (31) des Akkumulators (30) aufweist, die mit einer Verschlussstopfenanordnung (1) nach wenigstens einem der Ansprüche 1 bis 8 verschlossen ist.

10. Gehäuse nach Anspruch 9,
**dadurch gekennzeichnet, dass**
das Gehäuseoberteil (32) wenigstens einen in dem Gehäuseoberteil (32) zu wenigstens einer Gasauslassöffnung des Gehäuses verlaufenden Entgasungskanal (36) aufweist, wobei die Gasauslassöffnung von der kombinierten Befüllungs- und Entgasungsöffnung (31) beabstandet ist.

11. Akkumulator (30) mit einem Gehäuse (32, 33) nach einem der Ansprüche 9 oder 10.

## Claims

1. A sealing plug assembly (1) for sealing a combined filling and degassing opening (31) of a battery (30), wherein the sealing plug assembly (1) comprises at least one valve part (2), valve retainer (3), and sealing plug (4), wherein the valve part (2) is arranged on the valve retainer (3) and, together with the valve retainer (3), forms a valve device (16) for sealing off at least one interior chamber (34, 35) of the battery (30) from the environment which is openable upon the application of pressure, wherein the sealing plug (4) comprises at least one fixing means (7) for fixing the sealing plug (4) to the filling and degassing opening (31) and at least one first and one second circumferential sealing ring (5, 6) distanced from one another in the axial direction (L) of the sealing plug (4) and which are designed as effective seals between the sealing plug (4) and the surrounding material of the filling and degassing opening (31), wherein the at least one fixing means (7) is arranged between the first and the second sealing ring (5, 6) in the axial direction (L) of the sealing plug (4),
**characterized in that**
the sealing plug (4) comprises a valve loading area (13) over which the valve part (2) is loaded with a pretensioning force vis-à-vis the valve retainer (3).

2. The sealing plug assembly according to claim 1,
**characterized in that**
at least one of the sealing rings (5, 6) is formed as an axial sealing ring which is subjected to a retention force of the at least one fixing means (7) acting in an axial direction (L) of the sealing plug (4) via the sealing plug (4) fixed in the filling and degassing opening (31) by the at least one fixing means (7).

3. The sealing plug assembly according to claim 2,
**characterized in that**
the axial sealing ring (6) is arranged at an axial position of the sealing plug (4) which is disposed farther inward in the filling and degassing opening (31) than the other sealing ring (5, 6).

4. The sealing plug assembly according to one of the preceding claims,
**characterized in that**
at least one of the sealing rings (5, 6) is formed as a radial sealing ring (5), which is not subjected to a retention force of the at least one fixing means (7) acting in an axial direction (L) of the sealing plug (4) via the sealing plug (4) fixed in the filling and degassing opening (31) by the at least one fixing means (7).

5. The sealing plug assembly according to one of the preceding claims,
**characterized in that**
the sealing plug (4) comprises at least one degassing opening (10) in the axial region between the first and the second sealing ring (5, 6).

6. The sealing plug assembly according to one of the preceding claims,
**characterized in that**
the sealing plug (4) comprises a wall (8) at its end region directed toward the exterior of the battery which seals the interior chamber (34, 35) of the battery (30) from the environment when the sealing plug (4) is inserted into the filling and degassing opening (31).

7. The sealing plug assembly according to one of the preceding claims,
**characterized in that**
the sealing plug (4) comprises a tubular extension (9) extending in the axial direction (L), which extends axially through the second sealing ring (6) and enters into a cavity of the valve retainer (3).

8. The sealing plug assembly according to one of the preceding claims,
**characterized in that**
the cross section of an inner cavity (17) of the valve retainer (3) tapers in the axial direction (L) toward the valve part (2), in particular tapers rotationally symmetrical.

9. A housing of a battery (30) having a box-shaped lower housing part (33) and an upper housing part (32) serving as a cover of the housing which is able to be or is set onto the lower housing part (33), wherein the upper housing part (32) comprises at least one combined filling and degassing opening (31) of the battery (30) sealed by a sealing plug assembly (1) in accordance with at least one of claims 1 to 8.

10. The housing according to claim 9,
**characterized in that**
the upper housing part (32) comprises at least one degassing channel (36) extending in the upper housing part (32) to at least one gas outlet port of the housing, wherein the gas outlet port is distanced from the combined filling and degassing opening (31).

11. A battery (30) having a housing (32, 33) in accordance with one of claims 9 or 10.

## Revendications

1. Agencement d'opercule de fermeture (1) pour fermer une ouverture de remplissage et de dégazage combinée (31) d'un accumulateur (30), dans lequel l'agencement d'opercule de fermeture (1) comprend au moins une partie de vanne (2), un élément de retenue de vanne (3) et un opercule de fermeture (4), la partie de vanne (2) est agencée sur l'élément de retenue de vanne (3) et constitue, ensemble avec l'élément de retenue de vanne (3), un dispositif de vanne (16) susceptible d'être ouvert lors d'une sollicitation par pression et destiné à étancher au moins un volume intérieur (34, 35) de l'accumulateur (30) par rapport à l'environnement, l'opercule de fermeture (4) comprend au moins un moyen de fixation (7) pour fixer l'opercule de fermeture (4) sur l'ouverture de remplissage et de dégazage (31) et au moins une première et une seconde bague d'étanchéité périphérique (5, 6) qui présentent une distance l'une de l'autre en direction axiale (L) de l'opercule de fermeture (4) et qui sont réalisées sous forme de joints d'étanchéité agissant entre l'opercule de fermeture (4) et le matériau entourant l'ouverture de remplissage et de dégazage (31), ledit au moins un moyen de fixation (7) étant agencé en direction axiale (L) de l'opercule de fermeture (4) entre la première et la seconde bague d'étanchéité (5, 6),
**caractérisé en ce que**
l'opercule de fermeture (4) présente une surface de sollicitation de vanne (13) via laquelle la partie de vanne (2) est sollicitée par une force de précontrainte par rapport à l'élément de retenue de vanne (3).

2. Agencement d'opercule de fermeture selon la revendication 1,
**caractérisé en ce que**
l'une au moins des bagues d'étanchéité (5, 6) est réalisée sous forme de bague d'étanchéité axiale (6) qui est sollicitée par une force de retenue dudit au moins un moyen de fixation (7) agissant en direction axiale (L) de l'opercule de fermeture (4), l'opercule de fermeture (4) étant fixé dans l'ouverture de remplissage et de dégazage (31) par ledit au moins un moyen de fixation (7).

3. Agencement d'opercule de fermeture selon la revendication 2,
**caractérisé en ce que**
la bague d'étanchéité axiale (6) est agencée dans une position axiale de l'opercule de fermeture (4) située plus à l'intérieur de l'ouverture de remplissage et de dégazage (31) que l'autre bague d'étanchéité (5, 6).

4. Agencement d'opercule de fermeture selon l'une des revendications précédentes,
**caractérisé en ce que**
l'une au moins des bagues d'étanchéité (5, 6) est réalisée sous forme de bague d'étanchéité radiale (5) qui n'est pas sollicitée par une force de retenue dudit au moins un moyen de fixation (7) agissant en direction axiale (L) de l'opercule de fermeture (4), l'opercule de fermeture (4) étant fixé dans l'ouverture de remplissage et de dégazage (31) par ledit au moins un moyen de fixation (7).

5. Agencement d'opercule de fermeture selon l'une des revendications précédentes,
**caractérisé en ce que**
l'opercule de fermeture (4) présente au moins une ouverture de dégazage (10) dans la zone axiale entre la première et la seconde bague d'étanchéité (5, 6).

6. Agencement d'opercule de fermeture selon l'une des revendications précédentes,
**caractérisé en ce que**
l'opercule de fermeture (4) comprend une paroi (8) dans sa zone d'extrémité dirigée vers le côté extérieur de l'accumulateur, qui étanche le volume intérieur (34, 35) de l'accumulateur (30) par rapport à l'environnement lorsque l'opercule de fermeture (4) est mis en place dans l'ouverture de remplissage et de dégazage (31).

7. Agencement d'opercule de fermeture selon l'une des revendications précédentes,
**caractérisé en ce que**
l'opercule de fermeture (4) comprend un prolongement tubulaire (9) qui s'étend en direction axiale (L) et qui traverse la seconde bague d'étanchéité (6) en direction axiale et reçoit l'élément de retenue de vanne (3) dans une cavité.

8. Agencement d'opercule de fermeture selon l'une des revendications précédentes,
**caractérisé en ce que**
la section transversale d'une cavité intérieure (17) de l'élément de retenue de vanne (3) va en se rétrécissant en direction axiale (L) vers la partie de vanne (2), en particulier avec un rétrécissement à symétrie de révolution.

9. Boîtier d'un accumulateur (30) comportant une partie inférieure de boîtier (33) en forme de caisson et une partie supérieure de boîtier (32) servant de couvercle du boîtier et posée ou susceptible d'être posée sur la partie inférieure de boîtier (33), la partie supérieure de boîtier (32) présentant au moins une ouverture de remplissage et de dégazage combinée (31) de l'accumulateur, qui est refermée par un agencement d'opercule de fermeture (1) selon l'une au moins des revendications 1 à 8.

10. Boîtier selon la revendication 9,
**caractérisé en ce que**
la partie supérieure de boîtier (32) comprend au moins un canal de dégazage (36) qui s'étend dans la partie supérieure de boîtier (32) jusqu'à au moins une ouverture de sortie de gaz du boîtier, l'ouverture de sortie de gaz étant espacée de l'ouverture de remplissage et de dégazage combinée (31).

11. Accumulateur (30) comportant un boîtier (32, 33) selon l'une des revendications 9 ou 10.
